# EUROPÄISCHE PATENTSCHRIFT

(11) **EP 1 707 808 B1**
(45) Veröffentlichungstag und Bekanntmachung des Hinweises auf die Patenterteilung: **25.04.2012**
(21) Anmeldenummer: 06006287.4
(22) Anmeldetag: 27.03.2006
(51) Int. Cl.: F03D 11/04, E02B 17/02, F03D 1/00, E02D 27/42

(54) **Füsse für eine Offshore-Windenergieanlage**
Support feet for an offshore wind turbine
Pieds de support pour une éolienne maritime

(30) Priorität: 30.03.2005 DE 102005014868
(43) Veröffentlichungstag der Anmeldung: 04.10.2006
(73) Patentinhaber: REpower Systems SE, 22297 Hamburg (DE)
(72) Erfinder: Seidel, Marc, 49090 Osnabrück (DE)
(74) Vertreter: Groth, Wieland

(56) Entgegenhaltungen:
- WO-A1-03/095748
- DE-U1- 20 100 588
- JP-A- 2002 097 651
- US-A- 4 590 718
- US-B1- 6 227 803

## Beschreibung

Die Erfindung betrifft eine Windenergieanlage für den Offshore-Einsatz nach dem Oberbegriff des Anspruchs 1, einen Windpark nach dem Oberbegriff des Anspruchs 7 und ein Verfahren zum Aufstellen einer Windenergieanlage.

Windenergieanlagen werden herkömmlicherweise im Offshore-Einsatz in Form von Einpfahlgründungen im Meeresboden verankert. Weiterhin sind Tripodgründungen bekannt, wobei der Fuß der Windenergieanlage drei tetraederförmig auseinander laufende Beine aufweist, die jeweils im Meeresboden verankert werden. Darüber hinaus sind bei Ölplattformen Gründungen mittels Jackets bekannt, einer vorwiegend Zug- und Druckbelastung ausgesetzten Fachwerkkonstruktion.

Insbesondere bei Windenergieanlagenparks im Offshore-Bereich ist zu berücksichtigen, dass die Nabenhöhe der einzelnen Windenergieanlagen über der Meeresoberfläche zum einen aus optischen Gründen etwa gleich hoch sein sollte. Zum anderen können durch die gleiche Durchdringungshöhe auf Meeresoberflächenniveau z.B. die Bootsanleger an allen Windenergieanlagen des Parks in gleicher Höhe der Hauptkonstruktion ausgebildet werden. Das Eigenschwingungsverhalten der Anlage ist weniger von der Höhe über der Meeresoberfläche als vielmehr von der Höhe über dem Meeresboden abhängig. Somit muss das Eigenschwingungsverhalten der Windenergieanlagen, wenn eine Vielzahl von Anlagen in verschiedenen Meerestiefen aufgestellt wird, jedes Mal neu berechnet werden. Die Erzielung einer in etwa gleichen Nabenhöhe über der Meeresoberfläche ist bei den o.g. Gründungen aufwendig, denn die Länge des Tripods oder die des Jackets muss insgesamt dem Aufstellungsort angepasst werden.

Aus der WO 03/080939 A1 ist eine Gründung für eine Offshore-Windenergieanlage bekannt, die einen Saugfuß aufweist, an dem der Turm der Windenergieanlage mit seitlichen Verstrebungen befestigt ist.

In der DE 201 00 588 U1 ist eine Offshore-Windenergieanlage offenbart, die mit Wasser flutbare Füße aufweist. Durch das Fluten der Füße ist der Fuß der Windenergieanlage gesteuert absenkbar.

Aus der US 4,590,718 ist das Fundament einer Onshore-Windenergieanlage bekannt. Das Gewicht der Windenergieanlage wird über einen Turm auf den Boden abgegeben, wobei seitliche, in der Höhe verstellbare Füße die Gesamtkonstruktion stabilisieren.

In der JP 2003028046 A ist eine Gründung für eine Offshore-Windenergieanlage beschrieben, die unterschiedlich hohe Füße aufweist, wobei einige Füße oberhalb der Meeresoberfläche und einige Füße unterhalb der Meeresoberfläche angeordnet sind.

Aus der WO 03/0957 48 A1 ist die Gründung einer Offshore-Windkraftanlage bekannt. Dort stehen von Armen Ankerstifte senkrecht ab, die zum Eindringen in den Boden bestimmt sind.

Es ist somit in einem ersten Aspekt Aufgabe der Erfindung, eine Windenergieanlage für den Offshore-Einsatz zur Verfügung zu stellen, bei der wesentliche Teile standardisiert sind und keine individuellen Auslegungsberechnungen der Gesamtstruktur erfordern, und es ist in einem zweiten Aspekt Aufgabe der Erfindung, ein Verfahren zum Aufstellen einer solchen Windenergieanlage zur Verfügung zu stellen.

Die Aufgabe wird in ihrem ersten Aspekt durch eine Windenergieanlage für den Offshore-Einsatz mit den Merkmalen des Anspruchs 1 gelöst. Die erfindungsgemäße Windenergieanlage steht auf in ihrer Ausdehnung in Längsrichtung anpassbaren Füßen auf dem Meeresboden. Die Längsrichtung verläuft entlang der Längsrichtung eines Rohrturms der Windenergieanlage. Dabei sind Bauteile, wie z.B. Rohrturm, Maschinenhaus und Trägerstruktur, vorzugsweise standardisiert, und das unterschiedliche Meeresbodenprofil und die unterschiedliche Tiefe des Meeres am Aufstellungsort jedes Fußes wird zur Erzielung einer vorgegebenen Rotornabenhöhe über dem Meeresspiegel durch die unterschiedliche Längsausdehnung der Füße ausgeglichen. Die Beinenden haben einen standardisierten, vorzugsweise den gleichen Abstand zur Meeresoberfläche, und der jeweilige lichte Abstand zwischen Beinende und einem vorbestimmten Kontaktpunkt am Meeresboden ist durch den in seiner Längsausdehnung diesen Abstand ausgleichenden Fuß aufgefüllt. Die Längsausdehnung eines Fußes entspricht dabei der Differenz zwischen der Summe aus der Höhe der Rotornabe über dem Meeresspiegel und der Tiefe des Meeresbodens am vorbestimmten Kontaktpunkt und der Summe der standardisierten Längen von Rohrturm und Trägerstruktur. Vorzugsweise haben die Füße einer Anlage eine unterschiedliche Längsausdehnung, um die Anlage in Längsrichtung auszurichten. Dabei können die Füße einer Windenergieanlage untereinander und die Füße verschiedener Windenergieanlagen eine unterschiedliche Ausdehnung in Längsrichtung der Windenergieanlage aufweisen. Die Längsrichtung der aufgestellten Windenergieanlage verläuft vorzugsweise im Wesentlichen senkrecht zur Meeresoberfläche. Die Windenergieanlage steht mit Ihrem Gesamtgewicht vorzugsweise ausschließlich auf den Füßen. Vorzugsweise ist die Trägerstruktur mit in Längsrichtung angepassten und montierten Füßen zum Aufstellungsort schiffbar.

Vorzugsweise ist die Windenergieanlage mit ihrem Rohrturm und Rotor auf einem Gitterturm (Jacket) montiert, der großteils unter der Meeresoberfläche aufgestellt ist und ein Stück weit oberhalb der Meeresoberfläche herausragt. Der Gitterturm kann eine Mehrzahl von Beinen, vorzugsweise genau drei oder vier Beine, aufweisen, an deren Enden jeweils einer der Füße angeordnet ist. Die Erfindung ist aber auch für alle anderen mehrbeinigen Trägerstrukturen, z.B. Tripods, geeignet. Ein weiterer Vorteil in der erfindungsgemäßen Längenanpassung der Füße besteht in dem geringen Einfluss der Längenanpassung auf die Höhe der Eigenfrequenz, weil die Grundfläche der gespreizten Beine groß ist. Das Eigenschwingungsverhalten braucht im Wesentlichen nur einmal für alle Anlagen eines Parks berechnet zu werden.

Vorteilhafterweise weisen die Füße jeweils ein die Ausdehnung in Längsrichtung im Wesentlichen bestimmendes Abstandsbauteil auf, auf dem jeweils ein Bein des Gitterturms der Windenergieanlage steht. Es kann, z.B. bei entsprechenden Bodenprofilen, auch ausreichend sein, nur einen Fuß mit einem Abstandsbauteil zu versehen. Die Ausdehnung des Abstandsbauteils in Längsrichtung ist so bemessen, dass das Profil des Meeresbodens ausgeglichen wird und die Längsrichtung der aufgestellten Windenergieanlage im Wesentlichen senkrecht zur Meeresoberfläche verläuft. Das Abstandbauteil ist vorzugsweise am meeresbodenseitigen Ende des Beins angeordnet und zum direkten Kontakt mit dem Meeresboden bestimmt.

In einer vorteilhaften Weiterbildung der Erfindung kann das Abstandsbauteil einen mit schwerem Füllmaterial befüllbaren Hohlraum aufweisen, dessen Ausdehnung in Längsrichtung im Wesentlichen die Ausdehnung des Abstandsbauteils bestimmt. Als Füllmaterial wird vorzugsweise spezieller Beton, hochfester Mörtel (Grout), Kies, Eisenerz oder andere Ballastmaterialien mit hoher Dichte, z.B. Magna Dense oder so genannter "Orecrete" verwendet. Eine Befüllleitung für das Füllmaterial mündet günstigenfalls in den Hohlraum.

Neben der Ballastierung erhöht das Füllmaterial auch die Steifigkeit und Festigkeit der Füße. Ein besonderer Synergieeffekt bei der Ballastierung entsteht dadurch, dass an Standorten mit großer Wassertiefe, an denen folglich auch die Belastungen der Gründungen besonders hoch sind, auch besonders große Ballastkammem zur Verfügung stehen, die die zusätzlichen Belastungen durch erhöhtes Eigengewicht kompensieren.

Günstigenfalls sind an jedem der Füße wenigstens zwei Hohlräume vorgesehen. Dabei ist an jedem Fuß jeweils ein im aufgestellten Zustand der Windenergieanlage dem Meeresboden abgewandter Hohlraum und ein dem Meeresboden zugewandter Hohlraum vorgesehen. Beide Hohlräume können durch eine Füllmaterial leitende Durchlassöffnung miteinander verbunden sein. In Herstellungskosten sparender Weise können die dem Meeresboden abgewandten Hohlräume verschiedener Füße baugleich sein, so dass auch die Füße, zumindest in Teilen, standardisierbar sind, und nur der untere, dem Meeresboden zugewandte Hohlraum braucht in seiner Längsrichtung den Gegebenheiten des Aufstellungsortes angepasst zu werden. Nachdem die Windenergieanlage auf dem Meeresboden am vorbestimmten Aufstellungsort aufgestellt ist, können die oder der Hohlraum mit Füllmaterial befüllt werden. Dazu weist die Windenergieanlage wenigstens eine Befüllleitung, vorzugsweise weist jedes Bein genau eine Befüllleitung für das Füllmaterial auf. Vorzugsweise sind die Befüllleitungen innen an jedem der Beine des Gitterturmes vorgesehen. Dadurch ist eine exakte Befüllung jedes der Füße möglich. Es ist auch denkbar, dass eine separate Befüllleitung in den dem Meeresboden abgewandten Hohlraum und in den dem Meeresboden zugewandten Hohlraum mündet.

Jeder der Füße kann eine Stoppplatte aufweisen, die zum Kontakt mit dem Meeresboden bestimmt ist und die ein darüber hinausgehendes Eindringen des Fußes in den Meeresboden verhindern soll.

In einer vorteilhaften Weiterbildung der Erfindung weist wenigstens ein Fuß, vorzugsweise jeder der Füße, eine Saugeinrichtung, insbesondere eine Saugglocke auf. Die Saugglocke ist im aufgestellten Zustand der Windenergieanlage dem Meeresboden zugewandt und zum Kontakt mit dem Meeresboden bestimmt. Sie ermöglicht es, den mit ihr ausgestatteten Fuß am Meeresboden festzusaugen und so nicht nur einer horizontalen Verschiebung, sondern auch einer vertikalen Verschiebung der Windenergieanlage entgegenzuwirken. Damit wird eine besonders feste und darüber hinaus einfach zu handhabende Verankerung am Meeresboden ermöglicht.

Die Saugglocke eignet sich besonders zur Verankerung der vorzugsweise vier Füße des oben beschriebenen Gitterturmes. Die Saugglocke kann die Stoppplatte und den Wandungsring als Saugglockenwandung aufweisen. In der Saugglockenwandung, vorzugsweise an der Stoppplatte, ist, in einer bevorzugten Ausführungsform der Erfindung, ein Anschlussstutzen für einen Entlüftungsschlauch vorgesehen. Der Entlüftungsschlauch ist z. B. durch den unteren Hohlraum hindurch zur Meeresoberfläche geführt und dort an einer Pumpe angeschlossen. Nachdem die Windenergieanlage auf dem Meeresboden aufgestellt ist, kann die Luft aus der Saugglocke abgesaugt werden und somit den Fuß durch den sich in ihr ausbildenden Unterdruck zum einen an den Meeresboden heransaugen, bis die Stoppplatte mit dem Meeresboden in Kontakt gerät, und zum anderen wird durch den sich in der Saugglocke ausbildenden Unterdruck auch ein vertikales Verrücken und Kippen der Windenergieanlage verhindert.

Die Aufgabe wird in ihrem zweiten Aspekt durch einen Windpark für den offshore Einsatz mit wenigstens zwei. Windenergieanlagen mit einer im aufgestellten Zustand im Wesentlichen senkrecht zu einer Meeresoberfläche verlaufenden Längsrichtung und mit einer Trägerstruktur mit mehreren Beinen gelöst, an deren Enden meeresbodenseitig jeweils ein zum Kontakt mit dem Meeresboden bestimmter Fuß angeordnet ist, wobei die Türme und die Trägerstrukturen eine standardisierte Länge aufweisen und eine gleiche Höhe der Rotornaben über der Meeresoberfläche vorgegeben ist. Ein insbesondere durch die Tiefe und/oder das Relief des Meeresbodens verursachter, unterschiedlicher Abstand zwischen der Rotornabe und einem vorbestimmten Kontaktpunkt am Meeresboden, an dem jeweils ein zugehöriger einzeiner Fluß auf dem Meeresboden aufsetzen soll, ist erfindungsgemäß durch eine angepasste Ausdehnung des jeweiligen Fußes ausgeglichen.

Die Erfindung ermöglicht eine Kostenreduzierung beim Aufbau von Windparks. Der durch eine gleiche Rotornabenhöhe bewirkte günstige optische Eindruck des Windparks kann erfindungsgemäß auch bei der Verwendung insbesondere in der Länge standardisierter Türme und Trägerstrukturen erzielt werden. Vorzugsweise sind die Türme und Trägerstrukturen im Wesentlichen sogar vollständig standardisiert und damit in der Herstellung besonders kostengünstig. Die Differenzen der Abstände zwischen einer extern vorgegebenen Höhe der Rotornabe über der Meeresoberfläche und dem Meeresboden an den unterschiedlichen Aufstellungsorten der verschiedenen Windenergieanlagen wie auch die Differenzen der Abstände zwischen Rotornabenhöhe und den vorbestimmten Kontaktpunkten werden zur Erzielung einer gleichen Rotornabenhöhe durch Füße angepasster Längsausdehnung ausgeglichen.

Die Rotornabenhöhe über der Meeresoberfläche ist so hoch gewählt, dass keines der Beine einer der Windenergieanlagen bei der Verwendung des standardisierten Turmes und der standardisierten Trägerstruktur den Meeresboden berühren würde. Meeresbodenseitig ist an jedem der Beinenden ein Fuß angeordnet, dessen Ausdehnung in Längsrichtung dem lichten Abstand zwischen dem Beinende und dem Kontaktpunkt des Meeresbodens entspricht. Die Längsausdehnung eines Fußes entspricht dabei jeweils der Differenz zwischen der Summe aus der Höhe der Rotornabe über dem Meeresspiegel und der Tiefe des Meeresbodens über dem Kontaktpunkt und der Summe der standardisierten Längen von Rohrturm und Trägerstruktur.

Die Aufgabe wird auch durch ein Verfahren mit den Merkmalen des Anspruchs 8 gelöst. Zunächst werden die Kontaktpunkte des Meersbodens am Aufstellungsort der Anlage bestimmt, auf denen die einzelnen Füße aufsetzen werden. Dann wird die Tiefe des Meeresbodens über jedem der vorbestimmten Kontaktpunkt bestimmt. Aus den gewonnenen Ergebnissen wird die Länge, d. h. die Ausdehnung jedes Fußes in Längsrichtung bestimmt. Dabei wird die Verwendung der standardisierten Trägerstruktur und des Turmes für jede Windenergieanlage, insbesondere eines Windenergieanlagenparks, berücksichtigt. Dazu wird die Summe aus Höhe der Rotornabe über der Meeresoberfläche zuzüglich der Tiefe des Meeresbodens über dem Kontaktpunkt für jeden Fuß bestimmt und davon die Summe aus standardisierter Länge der Trägerstruktur und des Turmes abgezogen. Der der Differenz entsprechende lichte Abstand zwischen Beinende und Kontaktpunkt am Meeresboden entspricht der Ausdehnung dieses Fußes in Längsrichtung. Die so, vorzugsweise unterschiedlich, ausgedehnten Füße werden dann an der Windenergieanlage, vorzugsweise am Ende des zugehörigen Beines des Gittermastes der Windenergieanlage montiert. Der montierte und mit Auftriebskörpern versehene Gittermast wird dann z.B. mit Schwimmpontons zum Aufstellungsort geschifft und dort durch entsprechendes Entlüften der Auftriebskörper zum Meeresboden herabgelassen. Die Füße erreichen am Meeresboden den jeweils vorbestimmten Kontaktpunkt. Die Füße dringen auch durch das Eigengewicht der Anlage und ggf. durch zu diesem Zweck vorinstallierten Ballast soweit in den Meeresboden ein, dass die Stoppplatte mit dem Meeresboden in Kontakt gerät. Über die vorgesehene Befüllleitung werden die in den Füßen vorgesehenen Hohlräume dann mit dem o.g. Füllmaterial, insbesondere Grout, befüllt.

In einer bevorzugten Ausführungsform des erfindungsgemäßen Verfahrens weist die Windenergieanlage, vorzugsweise jeder der Füße der Windenergieanlage, eine Saugglocke auf. Die aufgestellte Windenergieanlage wird so am Meeresboden angeordnet, dass die Saugglocke mit dem Meeresboden im Wesentlichen luftdicht abschließt. Dann wird die Saugglocke über einen mit ihr verbundenen Entlüftungsschlauch entlüftet und der sich ausbildende Unterdruck saugt den Fuß in den Meeresboden hinein, bis die Stoppplatte mit dem Meeresboden in Kontakt gerät und den Eindringvorgang des Fußes in den Meeresboden stoppt. Der sich in der Saugglocke ausbildende Unterdruck gibt der Windenergieanlage eine zusätzliche Stabilität gegen ein Verrücken in vertikaler Richtung und gegen ein Verkippen. Nachdem die Saugglocke entlüftet ist, wird sie vorzugsweise luftdicht verschlossen, um für kurzzeitige Belastungen den Aufbau eines Unterdrucks zu ermöglichen.

Die Erfindung wird anhand von Ausführungsbeispielen in fünf Figuren beschrieben. Dabei zeigen:
- Fig. 1: eine schematische Seitenansicht einer erfindungsgemäßen Offshore- Windenergieanlage an einem flachen Aufstellungsort,
- Fig.2: eine schematische Seitenansicht einer erfindungsgemäßen Offshore- Windenergieanlage an einem tiefen Aufstellungsort,
- Fig. 3a: eine Detailansicht eines Fußes einer ersten Ausführungsform in Fig. 1,
- Fig. 3b: eine Detailansicht eines Fußes einer abgewandelten ersten Ausführungsform gemäß Fig.1,
- Fig. 4: einen herkömmlichen Fuß einer zweiten Ausführungsform einer Offshore- Windenergieanlage,
- Fig. 5: einen erfindungsgemäßen Fuß einer zweiten Ausführungsform einer Offshore- Windenergieanlage

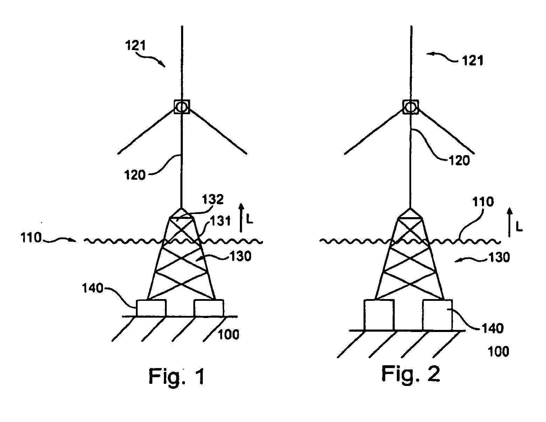

Die in Fig. 1 gezeigte Offshore-Windenergieanlage ist mittels eines Gitterturms 130 auf dem Meeresboden 100 an einem Aufstellungsort aufgestellt, und sie weist einen hier nur schematisch dargestellten, oberhalb der Meeresoberfläche 110 vertikal aufragenden Rohrturm 120 auf, mit an einem dem Meeresboden 100 gegenüberliegenden Ende angeordneten Maschinenhaus mit Rotor 121. An dem Meeresboden 100 zugewandten Ende des Gitterturms 130 sind vier Füße 140 montiert, mit denen der Gitterturm 130 auf dem Meeresboden 100 steht.

Der Rohrturm 120 verläuft entlang einer Längsrichtung L der Windenergieanlage. Der Gitterturm 130 weist vier, vorzugsweise in gleichem Winkel zur Längsrichtung L geneigte Beine 131 auf, die durch ein Kreuzgestänge 132 miteinander verbunden sind. Eine Verbindungslinie zwischen dem dem Meeresboden 100 gegenüberliegenden und dem dem Meeresboden 100 zugewandten Ende des Gittertumes 130 verläuft ebenfalls entlang der Längsrichtung L.

Der Gitterturm 130, der Rohrturm 120 und das Maschinenhaus mit Rotor 121 sind standardisiert ausgebildet. Der Rotor und eine ihm zugeordnete Rotornabe werden mit demselben Bezugszeichen 121 bezeichnet. Für unterschiedliche Aufstellungsorte ausgelegte Windenergieanlagen können somit jeweils die gleichen genannten standardisierten Bauteile 120, 121, 130 aufweisen, und sie können trotzdem, aufgrund der verschiedenen, dem jeweiligen Aufstellungsort angepassten Füße 140, in unterschiedlichen Wassertiefen und bei unterschiedlichen Meeresbodenprofilen aufgestellt werden. Ein Vergleich der Windenergieanlage in Fig. 2 mit der in Fig. 1 zeigt, dass durch eine Verlängerung der Füße 140 in Längsrichtung L der Windenergieanlage trotz der größeren Wassertiefe ein der Windenergieanlage in Fig. 1 baugleicher Gitterturm 130 verwendet werden kann. Die Gittertürme 130 beider Windenergieanlagen in Fig. 1 und Fig. 2 ragen trotzdem um etwa die gleiche Höhe über die Meeresoberfläche 110 hinaus.

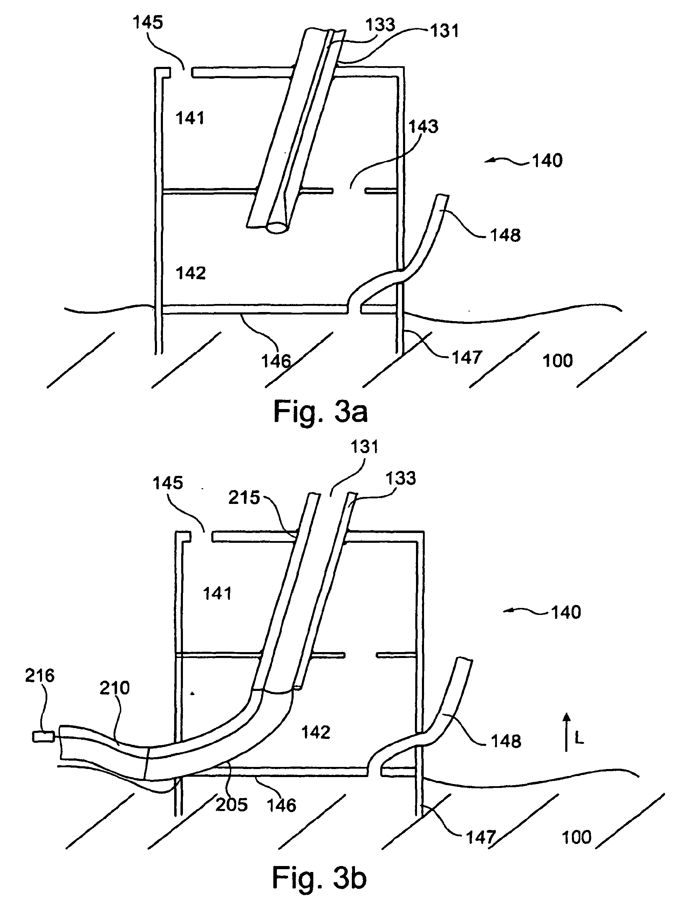

Fig. 3a ist die Detailansicht einer der in den Fig. 1 und 2 gezeigten Füße 140. Ein dem Fuß 140 zugeordnetes Bein 131 ist durch einen dem Meeresboden 100 abgewandten Hohlraum 141 geführt und ragt in einen unteren, dem Meeresboden 100 zugewandten Hohlraum 142 hinein. Die Hohlräume 141, 142 sind in einem Querschnitt parallel zum Meeresboden 100 kreisförmig oder mehreckig ausgebildet und weisen bei einer 3-5 MW Anlage quer zur Längsrichtung L einen Durchmesser von 3m bis 12m auf. Das Bein 131 ist mit Wandungen des Hohlraums 141 verschweißt. Der obere Hohlraum 141 und der untere Hohlraum 142 sind mittels einer Durchgangsöffnung 143 verbunden. Der untere Hohlraum 142 ist bis zu 15 m in Längsrichtung L ausgedehnt. Der untere Hohlraum 142 ist über eine in dem Bein 131 geführte Befüllleitung 133, durch die Füllmaterial strömen kann, befüllbar. Als Füllmaterial wird vorzugsweise spezieller Beton, Grout, Kies oder Eisenerz, z. B. Orecrete, verwendet. Während des Befüllvorgangs strömt das Füllmaterial, nachdem der untere Hohlraum 142 befüllt ist, durch die Durchgangsöffnung 143 in den oberen Hohlraum 141. Der obere Hohlraum 141 weist eine Luftausgangsöffnung 145 auf. Die Befüllleitung 133 kann auch zwei voneinander getrennte Befüllleitungen aufweisen, mit denen eine separate Befüllung, insbesondere durch zähflüssiges Füllmaterial, beider Hohlräume 141, 142 möglich ist. Dann kann auch eine Luftausgangsöffnung im unteren Hohlraum 142 vorgesehen sein.

Bevor die Windenergieanlage aufgestellt wird, werden das Profil und die Tiefe des Meeresbodens 100 am Aufstellungsort bestimmt. Der untere Hohlraum 142 ist an seiner dem Meeresboden zugewandten Seite durch eine Stoppplatte 146 begrenzt. Die Position der Stoppplatte 146 in Längsrichtung L des Fußes 140 wird dem Profil und der Tiefe des Meeresbodens 100 an dem Aufstellungsort der Windenergieanlage angepasst. In der Regel ist der Abstand zwischen der Meeresoberfläche 110 und dem Meeresboden 100 vom exakten Aufstellungsort jeder der Füße 140 abhängig. Die unterschiedliche Abstandsdifferenz wird durch entsprechend unterschiedlich lange Füße 140, d. h. durch eine unterschiedliche Position der Stoppplatte 146 in Längsrichtung des Fußes 140, ausgeglichen. Die Stoppplatte 146 weist einen sie außen meeresbodenseitig am Rand umlaufenden Wandungsring 147 auf, der sich in den Meeresboden 100 soweit eingräbt, bis die Stoppplatte 146 auf dem Meeresboden 100 aufliegt. Er ist hier nicht maßstabgerecht eingezeichnet. Der Wandungsring 147 dringt vorzugsweise bis zu 20 m in den Meeresboden ein. Durch die Stoppplatte 146 wird ein weiteres Einbringen des Fußes 140 in den Meeresboden 100 unterbunden. Der umlaufende Wandungsring 147 verhindert ein horizontales Verrutschen des Fußes 140.

Fig. 3b zeigt eine von der in Fig. 3a gezeigten Ausführungsform abgewandelte Ausführungsform eines erfindungsgemäßen Fußes. Die Befüllleitung 133 ist außerhalb des Beines 131 geführt. Im Bein 131 sind ein Kabelstrang mit Leitungen zum Abtransport des generierten Stromes sowie Leitungen zur Steuerung und Überwachung der Windenergieanlage geführt. Die geschützte und einfache Verlegung des Kabelstranges ist für einen zuverlässigen Betrieb der Anlage wichtig. Zur Vermeidung einer Schwächung des Beines 131 durch eine Kabelstrangöffnung schließt sich an dem meeresbodenseitigen Ende ein so genanntes J-Tube 205 an das Bein 131 an. Das J-Tube 205 durchstößt die Wandung des Hohlraums 142 an einer wenig belasteten Stelle, kurz oberhalb oder unterhalb des Meeresbodens 100. An das J-Tube 205 schließt sich, auf der dem Bein 131 abgewandten Seite, ein Schlauch 210 an. An Land wird ein Zugseil 215 durch das Bein 131, das J-Tube 205 und den Schlauch 210 gefädelt. Am schlauchseitigen Ende des Zugseils 215 ist ein Befestigungselement 216 für den Kabelstrang vorgesehen, der dann mit Hilfe des Zugseils durch den Schlauch 210, das J-Tube 205 und das Bein 133 der aufgestellten Windenergieanlage gezogen werden kann.

Ein Verfahren zum Aufstellen der Windenergieanlage kann wie folgt ablaufen: Der Gitterturm 130 wird mit luftbefüllbaren Schwimmhilfen zum Aufstellungsort gebracht und dort durch gesteuertes Luftablassen aus den Schwimmhilfen auf seine Füße 140 am vorgesehenen Aufstellungsort auf dem Meeresboden 100 aufgestellt. Nachdem die Windenergieanlage auf die Füße 140 gestellt ist, wird der Grout durch die durch die Beine 131 geführte Befüllleitung 133 in den unteren Hohlraum 142 geleitet. Das rohrförmige Bein 131 kann auch in seiner Gesamtheit als Befüllleitung genutzt werden. Eine separate Befüllleitung 133 ist dann nicht mehr notwendig. Die durch den eingefüllten Grout verdrängte Luft strömt durch die Durchgangsöffnung 143 und aus der Luftaustrittsöffnung 145 aus dem unteren Hohlraum 142 und oberen Hohlraum 141 heraus. Der Grout gelangt durch die Durchgangsöffnung 143 in den oberen Hohlraum 141 und füllt diesen ebenfalls mit Grout. Die Luft im oberen Hohlraum 141 kann durch die obere Luftausgangsöffnung 145 entweichen, bis auch der obere Hohlraum 141 mit Grout vollständig gefüllt ist. Ggf. wird die obere Luftausgangsöffnung 145 verschlossen. Die Befüllung der Füße 140 mit Grout erhöht die Kippstabilität der Anlage. Das Befüllen wirkt somit dem vertikalen als auch dem horizontalen Verrutschen des Fußes 140 entgegen. Das Befüllen der Füße kann alternativ auch an Land vorgenommen werden. Kombinationen beider Verfahren sind denkbar, d.h. eine Teilbefüllung an Land, Ausschwimmen und Restballastierung vor Ort können je nach Wassertiefe, Tragfähigkeit der Auftriebshilfen und sonstigen Standortbedingungen vorteilhaft sein. Bei einer 5 MW Windenergieanlage ergibt die Befüllung eines Hohlraumes 141, 142 als ein 8 m hoher Zylinder mit 7 m Durchmesser mit Magna Dense einen Ballast von 1100t pro Fuß.

Grundsätzlich sind weitere Ausführungsformen mit mehreren in Längsrichtung L nebeneinander angeordneten Hohlräumen 141, 142 denkbar, die über weitere Durchgangsöffnungen 143 miteinander verbunden sind.

Insbesondere dem vertikalen Verrutschen der Windenergieanlage wirkt eine wahlweise an der Stoppplatte 146 angeordnete Saugglocke 146, 147 entgegen. Die Saugglocke 146, 147 ermöglicht es, den Fuß 140 an den Meeresboden 100 zu saugen und somit in zusätzlicher Weise zu stabilisieren. Die Saugglocke 146, 147 ist insbesondere in den Fig. 1 bis 3 dargestellt. In Fig. 3 ist die Saugglocke 146, 147 im Wesentlichen durch die Stoppplatte 146 und den sie am Rand umlaufenden, mit der Stoppplatte 146 luftdicht abschließenden Wandungsring 147 ausgebildet. Darüber hinaus weist die Stoppplatte 146 eine Öffnung auf, die als Anschlussstutzen für einen Entlüftungsschlauch bzw. -leitung 148 ausgebildet ist. Der Entlüftungsschlauch 148 ist abschnittsweise durch den unteren Hohlraum 142 hindurch und durch eine seitliche Wandung aus dem unteren Hohlraum 142 zur Meeresoberfläche 110 herausgeführt. Oberhalb der Meeresoberfläche 110 ist der Entlüftungsschlauch 148 an eine Pumpe angeschlossen. Durch Abpumpen der Luft aus der auf dem Meeresboden 100 aufgelegten Saugglocke 146, 147 wird der Fuß 140 zum einen an den Meeresboden 100 gesaugt, bis die Stoppplatte 146 in Kontakt mit dem Meeresboden 100 gerät, zum anderen entsteht ein Unterdruck, der ein Verschieben des Fußes senkrecht zum Meeresboden, d.h. in vertikaler Richtung, verhindert. Als Vergleich zum Verständnis dieses Saugeffektes möge man sich vorstellen, einen umgedrehten Eimer senkrecht aus einer mit Wasser gefüllten Wanne zu ziehen. Dabei ist ein erheblicher Widerstand zu überwinden.

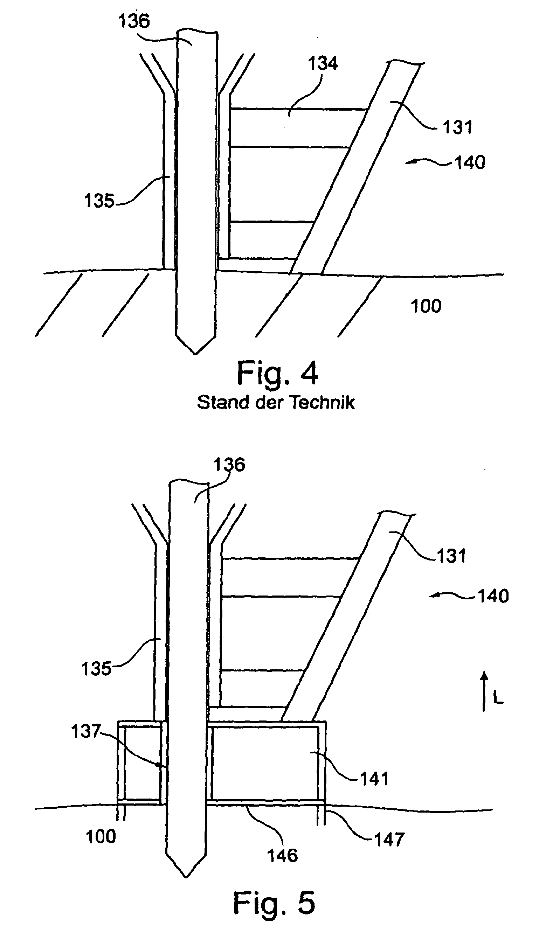

Fig. 4 zeigt eine weitere bekannte Ausführungsform eines Fußes 140, mit dem Gittertürme 130 herkömmlicher Windenergieanlagen im Meeresboden 100 verankert werden. Jedes der Beine 131 des Gitterturmes 130 ist über seitliche Verstrebungen 134 mit einer Führung 135 für einen Hering 136 verbunden. Der Hering 136 weist einen Durchmesser von bis zu drei Metern auf und eine Länge von mehreren, bis zu achtzig Metern auf. Der Hering 136 wird in der Führung 135 in den Meeresboden 100 getrieben und verankert das Bein 131 so fest im Meeresboden 100. Üblicherweise sind die Tragfähigkeiten des Herings 136 auf Zug und Druck unterschiedlich, d.h. die Zugbelastbarkeit liegt unterhalb der Druckbelastbarkeit. Sofern die Zugbelastbarkeit die Länge des Herings 136 dimensioniert, kann das ballastierte Abstandsbauteil 141, 142 in besonders vorteilhafter Ausführung auch dazu verwendet werden, die Zugbelastung der Auslegung zu verringern. Dieses kann auch unabhängig von einer erforderlichen Längenvariabilität erfolgen. Die minimale Ausdehnung in Längsrichtung L des Abstandsbauteils 141, 142 und somit die Menge an Ballast kann dann an jedem Standort, insbesondere an Standorten mit geringer Wassertiefe gerade so gewählt werden, dass die erforderliche Länge des Herings 136 für Belastung auf Zug und Druck identisch ist und der Hering 136 damit wirtschaftlich optimiert wird.

Fig. 5 zeigt eine erfindungsgemäße Weiterbildung der weiteren Ausführungsform des Fußes 140. Hier ist meeresbodenseitig des Beins 131 und der Führung 135 ein über die im Bein 131 innenseitig geführte Befüllleitung 133 mit Grout befüllbarer Hohlraum 141 vorgesehen. Der Hohlraum 141 weist eine Durchführung 137 in fluchtender Verlängerung der Führung 135 für den Hering 136 auf. Der Hering 136 in Fig. 5 ist, damit eine der Ausführungsform in Fig. 4 entsprechende Eindringtiefe in den Meeresboden 100 erreicht wird, um die Länge des Hohlraumes 141 in Längsrichtung L länger als der Hering 136 in Fig. 4. Die untere Wandung des Hohlraumes 141 in Fig. 5 ist auch als Stoppplatte 146 ausgebildet und begrenzt die Eindringtiefe des Fußes 140 in den Meeresboden 100. Die Stoppplatte 146 weist einen sie am Rand außen umlaufenden Wandungsring 147 auf, der sich in den Meeresboden 100 eingräbt und ein horizontales Verrutschen des Fußes 140 verhindert. Auch in dieser Ausführungsform können Stoppplatte 146 und Wandungsring 147 Teile einer Saugglocke sein.

## Patentansprüche

1. Windenergieanlage für den offshore Einsatz mit einem Rotor (121), der eine Rotornabe aufweist, mit einer im aufgestellten Zustand im Wesentlichen senkrecht zu einer Meeresoberfläche (110) verlaufenden Längsrichtung (L) und mit einer Trägerstruktur (130) mit mehreren Beinen (131), an deren Enden jeweils ein zum Kontakt mit dem Meeresboden (100) bestimmter Fuß (140) angeordnet ist, wobei eine Höhe der Rotornabe über der Meeresoberfläche (110) vorgegeben ist und jeder der Füße (140) eine Ausdehnung in Längsrichtung (L) aufweist, **dadurch gekennzeichnet, dass** die unterschiedliche Längsausdehnung der Füße (140) das unterschiedliche Meeresbodenprofil und die unterschiedliche Tiefe des Meeres am Aufstellungsort jedes Fußes (140) zur Erzielung der vorgegebenen Rotornabenhöhe über der Meeresoberfläche (110) ausgleicht.

2. Windenergieanlage nach Anspruch 1,
**dadurch gekennzeichnet, dass** wenigstens einer der Füße (140) ein die Ausdehnung in Längsrichtung (L) mit bestimmendes Abstandsbauteil (141, 142) aufweist.

3. Windenergieanlage nach Anspruch 2,
**dadurch gekennzeichnet, dass** das Abstandbauteil im Wesentlichen durch wenigstens einen mit Füllmaterial befüllbaren Hohlraum (141, 142) ausgebildet wird.

4. Windenergieanlage nach wenigstens einem der vorstehenden Ansprüche,
**dadurch gekennzeichnet, dass** wenigstens ein Fuß (140) eine die Eindringtiefe in den Meeresboden (100) begrenzende Stoppplatte (146) aufweist.

5. Windenergieanlage nach wenigstens einem der vorstehenden Ansprüche,
**gekennzeichnet durch** einen Gitterturm (130) mit einer Mehrzahl von Beinen (131), an deren Enden jeweils einer der Füße (140) angeordnet ist.

6. Windenergieanlage nach wenigstens einem der vorstehenden Ansprüche,
**dadurch gekennzeichnet, dass** wenigstens ein Fuß (140) eine, im aufgestellten Zustand der Anlage, dem Meeresboden (100) zugewandte Saugeinrichtung, insbesondere Saugglocke (146, 147) aufweist, mit der der wenigstens eine Fuß (140) am Meeresboden (100) ansaugbar ist.

7. Windpark für den offshore Einsatz mit wenigstens zwei Windenergieanlagen nach einem der Ansprüche 1 bis 6, mit einem Rotor (121), der eine Rotornabe aufweist, mit einer im aufgestellten Zustand im Wesentlichen senkrecht zu einer Meeresoberfläche (110) verlaufenden Längsrichtung (L) und mit einer Trägerstruktur (130) mit mehreren Beinen (131), an deren Enden meeresbodenseitig jeweils ein zum Kontakt mit dem Meeresboden (100) bestimmter Fuß (140) angeordnet ist, **dadurch gekennzeichnet, dass** die Türme (120) und die Trägerstrukturen (130) eine standardisierte Länge aufweisen und eine gleiche Höhe der Rotornaben (120) über der Meeresoberfläche (110) vorgegeben ist und jeder der Füße (140) eine Ausdehnung in Längsrichtung (L) aufweist und die unterschiedliche Längsausdehnung der Füße (140) das unterschiedliche Meeresbodenprofil und die unterschiedliche Tiefe des Meeres am Aufstellungsort jedes Fußes (140) zur Erzielung der gleichen vorgegebenen Rotornabenhöhe über der Meeresoberfläche (110) ausgleicht.

8. Verfahren zum Aufstellen einer Windenergieanlage für den offshore Einsatz nach einem der Ansprüche 1 bis 6, mit einer im aufgestellten Zustand im Wesentlichen senkrecht zu einer Meeresoberfläche (110) verlaufenden Längsrichtung (L) und mit einer Trägerstruktur (130) mit mehreren Beinen (131), an deren Enden jeweils ein zum Kontakt mit dem Meeresboden (100) bestimmter Fuß (140) angeordnet ist, indem:
die Tiefe des Meeresbodens (100) am Kontaktpunkt jedes Fußes (140) mit dem Meeresboden (100) bestimmt wird,
eine Rotornabenhöhe über der Meeresoberfläche (110) vorgegeben wird,
die Ausdehnung jedes Fußes (140) in Längsrichtung (L) so bestimmt wird, dass jeder der Füße eine Ausdehnung in Längsrichtung (L) aufweist, die einen Abstand zwischen dem Ende des Beines (131) und einem vorbestimmten Kontaktpunkt für den Fuß (140) am Meeresboden (100) ausgleicht,
die Füße (140) in der bestimmten Ausdehnung in Längsrichtung (L) an der Trägerstruktur (130) montiert werden.

9. Verfahren nach Anspruch 8,
**dadurch gekennzeichnet, dass** ein in dem Fuß (140) angeordneter Hohlraum nach dem Aufstellen der Windenergieanlage auf dem Meeresboden (100) mit einem Füllstoff befüllt wird.

10. Verfahren nach einem der Ansprüche 8 oder 9, mit einer Mehrzahl von zum Kontakt mit dem Meeresboden (100) bestimmten Füßen (140), wobei wenigstens ein Fuß (140) eine Saugglocke (146, 147) aufweist, mit der der wenigstens eine Fuß (140) der aufgestellten Windenergieanlage am Meeresboden (100) ansaugbar ist, indem:
die Windenergieanlage auf dem Meeresboden (100) aufgestellt wird,
die Saugglocke (146, 147) dabei auf dem Meeresboden (100) im Wesentlichen luftdicht abschließend aufgesetzt wird,
die Saugglocke (146, 147) entlüftet wird und
die Saugglocke (146, 147) dann im Wesentlichen luftdicht verschlossen wird.

## Claims

1. Wind energy system for offshore use with a rotor (121) comprising a rotor hub, with a longitudinal direction (L) running substantially vertically to an ocean surface (110) in the erected state and with a carrier structure (130) with several legs (113) on the end of each of which a foot (140) is arranged for making contact with the ocean bottom (100), whereby a height of the rotor hub above the ocean surface (110) is given and each foot has an extension in the longitudinal direction (L) **characterized in that** the differing longitudinal extension of the feet (140) compensates the differing ocean bottom profile and the differing depth of the ocean at the erection side of each foot (140) in order to obtain the given rotor hub height above the ocean surface (110).

2. Wind energy system according to claim 1, **characterized in that** at least one of the feet (140) comprises a structural spacing component (141, 142) that codetermines the extension in the longitudinal direction (L).

3. Wind energy system according to claim 2, **characterized in that** the structural spacing component is formed substantially by at least one hollow chamber (141, 142) that can be filled with filler material.

4. Wind energy system according to at least one of the previous claims, **characterized in that** at
least one foot (140) comprises a stop plate (146) limiting the penetration depth into the ocean bottom (100).

5. Wind energy system according to at least one of the previous claims, **characterized by** a lattice tower (130) with a plurality of legs (131) on the ends of which one of the feet (140) is arranged.

6. Wind energy system according to at least one of the previous claims, **characterized in that** at least one foot (140) comprises a suction device, especially a suction bell (146, 147) that faces the ocean bottom (100) in the erected state of the system and with which the at least one foot (140) can be drawn onto the ocean bottom (100).

7. Wind park for offshore use with at least two wind energy systems according to one of the claims 1 to 6 with a rotor (121) comprising a rotor hub, with a longitudinal direction (L) running substantially vertically to an ocean surface (110) in the erected state and with a carrier structure (130) with several legs (131) on the end, facing the ocean bottom, of each of which a foot (140) is arranged for making contact with the ocean bottom (100), **characterized in that** the towers (120) and the carrier structures (130) have a standardized length and a same height of the rotor hubs (120) above the ocean surface (110) is given and that each foot (140) has an extension in the longitudinal direction (L) and
the differing longitudinal extension of the feet (140) compensates the differing ocean bottom profile and the differing depth of the ocean at the erection side of each foot (140) in order to obtain the same given rotor hub height above the ocean surface (110).

8. Method for erecting a wind energy system for offshore use according to one of the claims 1 to 6 with a longitudinal direction (L) running substantially vertically to an ocean surface (110) in the erected state and with a carrier structure (130) with several legs (131) on the end of each of which a foot (140) is arranged for making contact with the ocean bottom (100), in that
the depth of the ocean bottom (100) is determined at the contact point of each foot (140) with the ocean bottom (100),
a height of the rotor hub above the ocean surface (110) is given,
the extension of each foot (140) in the longitudinal direction (L) is determined in such a manner that each foot has an extension in the longitudinal direction (L) that compensates an interval between the end of the leg (131) and a predetermined contact point for the foot (140) at the ocean bottom (100),
that the feet (140) are mounted onto the carrier structure (130) at the determined extension in the longitudinal direction (L).

9. Method according to claim 8, **characterized in that** a hollow chamber arranged in the foot (140) is filled with a filler after erection of the wind energy system on the ocean bottom (100).

10. Method according to claim 8 or 9, with a plurality of feet (140) determined for making contact with the ocean bottom (100), in which at least one foot (140) comprises a suction bell (146, 147) with which the at least one foot (140) of the erected wind energy system can be drawn onto the ocean bottom (100) in that the wind energy system is erected on the ocean bottom (100),
the suction bell (146, 147) is placed on the ocean bottom (100) in such a manner that it seals substantially airtight,
the suction bell (146, 147) is emptied of air, and
that the suction bell (146, 147) is then closed in a substantially airtight manner.

## Revendications

1. Eolienne destinée à une utilisation en mer, comprenant un rotor (121) qui présente un moyeu de rotor, comprenant une direction longitudinale (L) qui, à l'état installé, s'étend de façon sensiblement perpendiculaire à une surface marine (110), et comprenant une structure de support (130) dotée de plusieurs piliers (131), aux extrémités desquels est disposé respectivement un pied (140) destiné à être en contact avec le fond marin (100), sachant qu'une hauteur du moyeu de rotor au-dessus de la surface marine (110) est prédéterminée et chacun des pieds (140) a une dimension dans la direction longitudinale (L), **caractérisée en ce que** la longueur variable des pieds (140) compense le profil variable du fond marin et les différences de profondeur de la mer sur le lieu d'installation de chaque pied (140), afin d'obtenir la hauteur de moyeu de rotor prédéterminée au-dessus de la surface marine (110).

2. Eolienne selon la revendication 1, **caractérisée en ce qu'**au moins un des pieds (140) présente un élément d'espacement (141, 142) déterminant, entre autres, la dimension dans la direction longitudinale (L).

3. Eolienne selon la revendication 2, **caractérisée en ce que** l'élément d'espacement est constitué essentiellement d'au moins une cavité (141, 142) pouvant être remplie avec un matériau de remplissage.

4. Eolienne selon au moins une des revendications précédentes, **caractérisée en ce qu'**au moins un pied (140) présente une plaque d'arrêt (146) limitant la profondeur de pénétration dans le fond marin (100).

5. Eolienne selon au moins une des revendications précédentes, **caractérisée en ce qu'**elle comporte une tour en treillis (130) doté de plusieurs piliers (131), aux extrémités desquels est disposé respectivement l'un des pieds (140).

6. Eolienne selon au moins une des revendications précédentes, **caractérisée en ce qu'**au moins un pied (140) présente un dispositif d'aspiration, notamment une ventouse (146, 147), qui, à l'état installé de l'éolienne, est tourné vers le fond marin (100) et qui permet de fixer par aspiration le pied (140), au nombre d'au moins un, au fond marin (100).

7. Parc éolien destiné à une utilisation en mer, comprenant au moins deux éoliennes selon une des revendications 1 à 6, comprenant un rotor (121) qui présente un moyeu de rotor, comprenant une direction longitudinale (L) qui, à l'état installé, s'étend de façon sensiblement perpendiculaire à une surface marine (110), et comprenant une structure de support (130) dotée de plusieurs piliers (131), aux extrémités desquels, côté fond marin, est disposé respectivement un pied (140) destiné à être en contact avec le fond marin (100), **caractérisé en ce que** les tours (120) et les structures de support (130) présentent une longueur standardisée, et une hauteur identique des moyeux de rotor (120) au-dessus de la surface marine (110) est prédéterminée, et chacun des pieds (140) a une dimension dans la direction longitudinale (L), et la longueur variable des pieds (140) compense le profil variable du fond marin et les différences de profondeur de la mer sur le lieu d'installation de chaque pied (140), afin d'obtenir l'hauteur identique prédéterminée des moyeux de rotor au-dessus de la surface marine (110).

8. Procédé d'installation d'une éolienne pour une utilisation en mer selon une des revendications 1 à 6, comprenant une direction longitudinale (L) qui, à l'état installé, s'étend de façon sensiblement perpendiculaire à une surface marine (110), et comprenant une structure de support (130) dotée de plusieurs piliers (131), aux extrémités desquels est disposé respectivement un pied (140) destiné à être en contact avec le fond marin (100), procédé selon lequel :
on détermine la profondeur du fond marin (100) au point de contact de chaque pied (140) avec le fond marin (100),
on prédéfinit une hauteur de moyeu de rotor au-dessus de la surface marine (110),
on détermine la dimension de chaque pied (140) dans la direction longitudinale (L),
de manière à ce que chacun des pieds présente une dimension dans la direction longitudinale (L) qui compense une distance entre l'extrémité du pilier (131) et un point de contact prédéterminé pour le pied (140) sur le fond marin (100),
on monte les pieds (140) avec la dimension déterminée dans la direction longitudinale (L) sur la structure de support (130).

9. Procédé selon la revendication 8, **caractérisé en ce que**, après installation de l'éolienne sur le fond marin (100), une cavité disposée dans le pied (140) est remplie avec un matériau de remplissage.

10. Procédé selon une des revendications 8 ou 9, comprenant une pluralité de pieds (140) destinés à être en contact avec le fond marin (100), au moins un pied (140) présentant une ventouse (146, 147) avec laquelle le pied (140), au nombre d'au moins un, de l'éolienne installée peut être fixé par aspiration au fond marin (100), procédé selon lequel :
l'éolienne est installée sur le fond marin (100),
la ventouse (146, 147) est posée, lors de cette installation, de manière sensiblement étanche à l'air sur le fond marin (100),
l'air est évacué de la ventouse (146, 147), et
la ventouse (146, 147) est ensuite fermée de manière sensiblement étanche à l'air.
